# EUROPÄISCHE PATENTANMELDUNG

(11) **EP 3 915 647 A1**
(43) Veröffentlichungstag der Anmeldung: **01.12.2021**
(21) Anmeldenummer: 20177101.1
(22) Anmeldetag: 28.05.2020
(51) Int. Cl.: A62B 23/02, A41D 13/11, B01D 39/16

(54) **ATEMSCHUTZMASKE**

(71) Anmelder: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(57) **Zusammenfassung**

Die Erfindung betrifft eine Atemschutzmaske (1) umfassend ein Filtermaterialstück (2) aus einem luftdurchlässigen Material und wenigstens ein Befestigungsband (3), wobei das luftdurchlässige Material mindestens eine Lage (6,7) eines Vliesstoffes umfasst, wobei das wenigstens eine Befestigungsband (3) zur Befestigung der Atemschutzmaske (1) am Kopf ausgebildet ist, wobei das luftdurchlässige Material und das wenigstens eine Befestigungsband (3) aus dem gleichen Kunststoffmaterial gefertigt sind.

## Beschreibung

Atemschutzmasken bedecken regelmäßig Mund und Nase des Trägers mit einem Filtermaterial und dienen zu dessen Schutz vor in der Luft enthaltenen Schadstoffen und zum Schutz der Umgebung vor ausgeatmeten Bakterien und Viren. Insofern umfasst der Begriff unter anderem insbesondere einen Mund-Nasen-Schutz, medizinische Gesichtsmasken und filtrierende Halbmasken.

Das verwendete Filtermaterial besteht heutzutage im Allgemeinen aus einem Vliesstoff, der aus Kunststoff hergestellt wird. Viele Atemschutzmasken sind für den Einmalgebrauch gedacht und werden danach entsorgt.

Angesichts des immer weiter steigenden Bedarfs an Atemschutzmasken führt dies zu einer großen Menge an Kunststoffabfällen.

Angesichts dessen besteht die der Erfindung zugrundeliegende Aufgabe darin, eine in ökologischer Hinsicht verbesserte Atemschutzmaske mit guten Filter- bzw. Schutzeigenschaften bereit zu stellen.

Diese Aufgabe wird durch eine Atemschutzmaske gemäß Anspruch 1 gelöst.

Erfindungsgemäß wird eine Atemschutzmaske umfassend ein Filtermaterialstück aus einem luftdurchlässigen Material und wenigstens ein Befestigungsband bereitgestellt, wobei das luftdurchlässige Material mindestens eine Lage eines Vliesstoffes umfasst, wobei das wenigstens eine Befestigungsband zur Befestigung der Atemschutzmaske am Kopf ausgebildet ist, wobei das luftdurchlässige Material und das wenigstens eine Befestigungsband aus dem gleichen Kunststoffmaterial gefertigt sind.

Der Filterteil der Atemschutzmaske in Form des Filtermaterialstücks ist dementsprechend aus einem luftdurchlässigen Material, das ein- oder mehrlagig aufgebaut sein kann. Mindestens eine dieser Lagen ist dabei ein Vliesstoff. Da das Kunststoffmaterial der luftdurchlässigen Lage und damit des Filterteils das gleiche ist wie das des Befestigungsbands, erlaubt die erfindungsgemäße Atemschutzmaske ein vereinfachtes und damit ökologisch vorteilhaftes Recycling der Maske. Aufgrund des verwendeten sortenreinen Kunststoffs entfällt eine aufwendige Trennung in verschiedene Bestandteile unterschiedlichen Materials.

Im Sinne der vorliegenden Erfindung bezeichnet ein "Vliesstoff" ein Wirrgelege, das einen Verfestigungsschritt (Vliesbindeschritt) durchlaufen hat., so dass es eine ausreichende Festigkeit aufweist, um insbesondere maschinell (also in industriellem Maßstab) zu Rollen auf- bzw. abgewickelt zu werden. Die für ein derartiges Aufwickeln minimal erforderliche Bahnspannung beträgt 0,044 N/mm. Die Bahnspannung sollte nicht höher als 10 % bis 25 % der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein "Faservlies" (oder kurz nur "Vlies" genannt) entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff Vliesstoff ("Nonwoven") wird in anderen Worten gemäß der Definition nach ISO Standard ISO 9092:1988 bzw. CEN Standard EN 29092 verwendet. Details zur Verwendung der darin beschriebenen Definitionen und/oder Verfahren lassen sich auch dem Lehrbuch "Vliesstoffe", H. Fuchs, W. Albrecht, WILEY-VCH, 2012, entnehmen.

Unter "Fasern" werden sowohl Fasern endlicher Länge (bspw. Stapelfasern) als auch Fasern theoretisch unendlicher Länge, d.h. Endlosfasern oder Filamente, verstanden.

Das Kunststoffmaterial kann Polypropylen, ein Polyester, insbesondere Polyethylenterephthalat und/oder ein biologisch abbaubares Kunststoffmaterial sein.

Biologisch abbaubare Kunststoffe können durch biologischen Abbau aus der Umwelt entfernt und dem mineralischen Stoffkreislauf zugeführt werden. Insbesondere werden unter "biologisch abbaubare Kunststoffe" Kunststoffe verstanden, welche die Kriterien der Europäischen Normen EN 13432 und/oder EN 14995 erfüllen.

Das biologisch abbaubare Kunststoffmaterial kann insbesondere ein Polylactid (PLA), ein Polyhydroxyalkanoat (PHA), ein Polycaprolacton (PCL), einen Celluloseester, insbesondere Celluloseacetat, Polybutylenadipat-terephthalat (PBAT) oder Polybutylensuccinat (PBS) umfassen.

Der Vliesstoff kann ein trocken- oder nassgelegter Vliesstoff oder ein Extrusionsvliesstoff, insbesondere ein Meltblown-, Spunbond- (Spinnvlies) oder Spunblown-Vliesstoff sein.

Der mindestens eine Vliesstoff kann Stapelfasern oder Endlosfasern umfassen. Fertigungstechnisch können auch mehrere Schichten an Stapelfasern oder Endlosfasern vorgesehen werden, die zu genau einer Lage Vliesstoff verfestigt werden.

Das luftdurchlässige Material kann insbesondere genau eine filteraktive Lage umfassen, wobei die genau eine filteraktive Lage der mindestens einen Vliesstofflage entspricht. Als filteraktive Lage wird hier eine für die Filterung des zu filternden Luftstromes relevante Lage bezeichnet. Das luftdurchlässige Material kann außerdem ein Netz umfassen. Das Netz kann zur ästhetischen Gestaltung, beispielsweise zur farblichen Gestaltung, der Atemschutzmaske dienen. Das Netz kann auch zur Verbesserung der Stabilität des Filtermaterialstücks der Atemschutzmaske dienen. Das Netz kann beispielsweise ein extrudiertes Netz oder ein gewebtes Netz sein. Das Netz kann eine Maschenweite von wenigstens 1 mm, insbesondere wenigstens 3 mm, aufweisen. Das Netz kann aus dem gleichen Kunststoffmaterial wie die Vliesstofflage bestehen.

Das luftdurchlässige Material kann einlagig oder mehrlagig aufgebaut sein, wobei mindestens eine, mehrere oder sämtliche der Lagen ein Vliesstoff sind.

Das Filtermaterialstück bzw. das luftdurchlässige Material kann aus einer Vliesstofflage bestehen. Mit anderen Worten kann das Filtermaterialstück einlagig sein, wobei die einzige Lage der Vliesstofflage entspricht. In diesem Fall kann die Vliesstofflage insbesondere in Form einer Meltblownlage oder Spun-blown-Lage ausgebildet sein. Insbesondere ist in diesem Fall keine Stützlage oder Verstärkungslage für die Vliesstofflage vorgesehen. Mit anderen Worten kann die Vliesstofflage derart ausgebildet sein, dass sie den üblichen Beanspruchungen bei Herstellung und Gebrauch standhält.

Der mindestens eine Vliesstoff kann ein kalandrierter Vliesstoff sein, insbesondere ein thermisch oder mittels Ultraschall kalandrierter Vliesstoff. Zum thermischen Kalandrieren kann das zunächst unverfestigte Vlies zwischen zwei Walzen hindurchgeführt werden, von welchen wenigstens eine auf die Schmelztemperatur der das Vlies bildenden Fasern erhitzt ist. Wenigstens eine der Kalandrierwalzen kann Erhebungen aufweisen. Dadurch können Schmelzzonenbereiche oder Schweißpunkte gebildet werden.

Ultraschallkalandrierung oder Ultraschallverfestigung beruht auf der Umwandlung elektrischer Energie in mechanische Vibrationsenergie. Dabei werden Verfestigungshörner in Vibration versetzt, wobei an den Vibrationsstellen die Fasern an ihren Kreuzungsstellen im Vlies erweicht und miteinander verschweißt werden. Dadurch können Schweißpunkte gebildet werden.

Das luftdurchlässige Material kann mehrlagig aufgebaut sein, wobei mindestens eine, mehrere oder sämtliche der Lagen einen Vliesstoff umfassen oder hieraus gebildet sind.

Das luftdurchlässige Material kann auch eine oder mehrere zusätzliche Lagen umfassen, welche keinen Vliesstoff umfassen, beispielsweise ein Netz. In diesem Fall können auch die zusätzlichen Lagen aus dem gleichen Kunststoffmaterial wie die Vliesstofflage bestehen.

Die mindestens eine Vliesstofflage kann ein Flächengewicht von 20 g/m² bis 200 g/m², insbesondere 40 g/m² bis 150 g/m², insbesondere 80 g/m², aufweisen.

Die mindestens eine Vliesstofflage kann eine Höchstzugkraft in Maschinenrichtung von mehr als 20 N, insbesondere von mehr als 40 N, und/oder in Querrichtung von mehr als 20 N, insbesondere mehr als 40 N, aufweisen.

Die mindestens eine Vliesstofflage kann eine Luftdurchlässigkeit von 100 l/(m²s) bis 1000 l/(m²s), insbesondere von 300 l/(m²s) bis 600 l/(m²s), insbesondere von 400 l/(m²s) bis 500 l/(m²s), aufweisen.

Das luftdurchlässige Material kann mindestens eine Feinfilterlage und/oder mindestens eine Stützlage umfassen, wobei mindestens eine, mehrere oder sämtliche der Feinfilterlagen und/oder mindestens eine, mehrere oder sämtliche der Stützlagen Vliesstoffe sind.

Eine oder beide Trägerlagen können ein Vliesstoff, insbesondere ein Spunbond oder ein Spunblown sein. Alternativ können eine oder beide Trägerlagen ein Netz (Netting) sein. Das Netz kann dabei Eigenschaften aufweisen, wie sie in der EP 2 011 556 A1 beschrieben sind, die hiermit durch Bezugnahme aufgenommen wird.

Eine Stützlage (manchmal auch "Trägerlage" oder "Verstärkungslage" genannt) im Sinne der vorliegenden Erfindung ist dabei eine Lage, die dem mehrlagigen Verbund des Filtermaterialstücks die notwendige mechanische Festigkeit verleiht. Hierunter wird ein offener, poröser Vliesstoff bzw. ein Nonwoven mit leichtem Flächengewicht bezeichnet. Eine Stützlage dient unter anderem dazu, andere Lagen oder Schichten zu stützen. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Feinfilterlage dient der Erhöhung der Filtrationsleistung des mehrlagigen Filtermaterialstücks durch Einfangen von Partikeln, die beispielsweise durch die Stützlage hindurch gelangen. Zur weiteren Erhöhung der Abscheideleistung kann die Feinfilterlage bevorzugt elektrostatisch (z.B. durch Coronaentladung oder Hydrocharging) aufgeladen werden.

Bei den Atemschutzmasken kann jede Stützlage ein Spinnvlies (Spunbond) oder ein SpunBlown sein, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bildenden Fasern im Bereich von 0,5 dtex bis 15 dtex.

Das luftdurchlässige Material kann dabei vorzugsweise ein bis drei Stützlagen umfassen.

Im Falle des Vorhandenseins zweier Stützlagen beträgt die Gesamtgrammatur der Summe aller Stützlagen vorzugsweise 10 bis 200 g/m², weiter bevorzugt 15 bis 150 g/m², weiter bevorzugt 20 bis 100 g/m², weiter bevorzugt 30 bis 90 g/m², insbesondere 40 bis 70 g/m².

Eine Stützlage in Form eines Spunbonds oder eines Spun-blowns kann insbesondere aus PBAT (bspw. Ecoflex von BASF) einem anderen biologisch abbaubaren Polyester wie Duvaltex bestehen.

Gemäß einer weiteren Ausgestaltungsform ist jede Feinfilterlage ein Extrusionsvliesstoff, insbesondere ein Meltblown- oder ein Spun-Blown-Vliesstoff. Der Extrusionsvliesstoff hat vorzugsweise eine Grammatur von 10 bis 80 g/m², weiter bevorzugt 15 bis 50 g/m², insbesondere 20 bis 40 g/m².

Hierbei ist es möglich, dass das luftdurchlässige Material 1 bis 5 Feinfilterlagen umfasst.

Im Falle des Vorhandenseins mindestens zweier Feinfilterlagen beträgt die Gesamtgrammatur der Summe aller Feinfilterlagen vorzugsweise 10 bis 80 g/m², weiter bevorzugt 15 bis 50 g/m², insbesondere 20 bis 40 g/m².

Eine Ausführungsform des Aufbaus des luftdurchlässigen Materials für die erfindungsgemäße Atemschutzmaske sieht den nachfolgend beschriebenen mehrlagigen Aufbau mit einer Lagenfolge vor:
eine Stützlage, eine oder zwei Feinfilterlagen sowie eine weitere Stützlage.

Insbesondere wenn die Stützlage als Spunbond-Vliesstoff und die Feinfilterlage als Meltblown-Vliesstoff aufgebaut sind, liegt dann ein SMS- bzw. SMMS-Aufbau vor. Statt des Spunbonds können in diesem Aufbau auch Spun-Blown-Lagen eingesetzt werden.

Die mindestens eine Vliesstofflage kann elektrostatisch aufgeladen sein. Bei einem mehrlagigen Aufbau können eine, mehrere oder alle Vliesstofflagen elektrostatisch aufgeladen sein. Insbesondere kann eine Meltblownlage oder eine Spun-Blown-Lage elektrostatisch aufgeladen sein.

Es können die Fasern vor dem Verfestigen und/oder der Vliesstoff, also nach dem Verfestigen, elektrostatisch aufgeladen werden. Für ein elektrostatisches Aufladen haben sich insbesondere PP, PET oder PLA als vorteilhaft erwiesen.

Die Vliesstofflage kann durch ein Koronaverfahren elektrostatisch aufgeladen werden. Alternativ oder zusätzlich kann die Vliesstofflage durch ein Verfahren gemäß der Lehre der US 5,401,446 elektrostatisch aufgeladen werden. Eine weitere Variante besteht in einem Zusatz von Additiven und einer Wasserstrahlbehandlung (Hydrocharging), wie sie beispielsweise in der WO 97/07272 beschrieben ist.

Bei den beschriebenen Atemschutzmasken können mindestens eine, mehrere oder sämtliche der Vliesstofflage gekreppt sein.

Die Kreppung der Vliesstofflage führt zu einer Vergrößerung der durchströmbaren Fläche und damit zu einer entsprechenden Verringerung des Atemwiderstands. Für das Kreppen der Vliesstofflage kann insbesondere das Micrex-Mikro-Krepp-Verfahren eingesetzt werden. Rein beispielhaft wird auf die WO 2007/079502 verwiesen.

Bei der Atemschutzmaske kann das luftdurchlässige Material gekreppt sein. Wenn das gesamte luftdurchlässige Material, also alle Lagen, gekreppt sind, wird eine erhöhte Dehnbarkeit des Filtermaterialstücks erzielt, die zu einer verbesserten Passform der Atemschutzmaske führt. Die Erhöhung der Oberfläche durch das Kreppen kann weiteren zu einer weicheren Anmutung, wodurch die Hautfreundlichkeit verbessert wird, und einer besseren Feuchtigkeitsaufnahme führen.

Die Krepprichtung, also die Richtung der Kreppfalten, kann derart ausgestaltet sein, dass die Kreppfalten im bestimmungsgemäßen Gebrauch der Atemschutzmaske im Wesentlichen horizontal oder im Wesentlichen vertikal verlaufen.

Die beschriebenen Atemschutzmasken können ein weiteres Filtermaterialstück aus einem luftdurchlässigen Material umfassen, wobei das weitere Filtermaterialstück mindestens eine Lage eines Vliesstoffs umfasst, das aus dem gleichen Kunststoffmaterial wie die Vliesstofflage des ersten Filtermaterialstücks gefertigt ist.

Dies erlaubt insbesondere die Herstellung einer filtrierenden Halbmaske. Die beiden Filtermaterialstücke, durch die hier der Filterteil gebildet werden, liegen dabei aufeinander.

Bei der Atemschutzmaske können die zwei Filtermaterialstücke eine polygonale Form aufweisen, wobei die Filtermaterialstücke entlang einer Kante nicht miteinander verschweißt sind. Die Form der Filtermaterialstücke kann insbesondere rechteckig oder sechseckig sein. Beide Filtermaterialstücke können die gleiche Form und Dimensionierung aufweisen; sie können insbesondere passgenau aufeinanderliegen.

Die Verschweißung der Filtermaterialstücke miteinander ist ein von der Verschweißung mehrerer Lagen eines Filtermaterialstücks unabhängiger Aspekt. So können entlang einer Kante der beiden Filtermaterialstücke diese beiden miteinander verschweißt sein und jedes Filtermaterialstück für sich aus mehreren (zuvor) verschweißten Lagen bestehen; letztere Lagenverschweißung, die zu einem entsprechenden Laminat führt, muss aber nicht sein oder kann auch nur an einzelnen Kanten der Lagen eines Filtermaterialstücks gegeben sein.

Jedes Filtermaterialstück und/oder der Filterteil der (fertigen, aber unbenutzten) Atemschutzmaske kann (in Draufsicht) eine polygonale, insbesondere rechteckige oder sechseckige Form haben. Bei der sechseckigen Form können zwei benachbarte rechte Winkel vorgesehen sein.

Die beiden Filtermaterialstücke können entlang aller übrigen Kanten miteinander verschweißt sein. Damit verbleibt genau eine nicht verschweißte Kante des Polygons. Durch die nicht miteinander verschweißte Kante entsteht die Öffnung der Atemschutzmaske für das Gesicht des Trägers/Nutzers. Bei zwei Filtermaterialstücken oder einem Filterteil mit rechteckiger Form kann die nicht verschweißte Kante insbesondere eine Kante zwischen zwei rechten Winkeln sein.

Diese Merkmale erlauben eine sehr einfache Herstellung der Atemschutzmaske.

Die oben und nachfolgend beschriebenen Merkmale und Eigenschaften einer luftdurchlässigen Lage bzw. eines Filtermaterialstücks können insbesondere bei einer Atemschutzmaske umfassend zwei Filtermaterialstücke bei jedem der Filtermaterialstücke bzw. deren luftdurchlässigen Lage in gleicher Weise gegeben und erfüllt sein.

Der Filterteil bzw. jedes Filtermaterialstück kann eine dreidimensional geformte Form, beispielsweise aufgrund räumlicher Umformung, aufweisen. Insbesondere letzteres erlaubt eine genauere Anpassung an die Gesichtsform, was zu einem geringeren Leckvolumenstrom führt.

Das wenigstens eine Befestigungsband kann ein- oder mehrlagig aufgebaut sein.

Das wenigstens eine Befestigungsband kann ein thermoplastisches Polymer, insbesondere ein biologisch abbaubares thermoplastisches Polymer, umfassen oder hieraus gebildet sein. Das thermoplastische Polymer kann insbesondere ein thermoplastisches Elastomer sein. Es kann sich beispielsweise um thermoplastisches Polyurethan (TPU) oder um Vistamaxx handeln. So ist auf diese Weise eine sortenreine Atemschutzmaske möglich, indem die luftdurchlässige Lage ebenfalls aus einem Polyester gefertigt wird.

Alternativ kann - wie schon erwähnt - insbesondere PP oder PLA für das ein- oder mehrlagige Befestigungsband eingesetzt werden.

Das wenigstens eine Befestigungsband kann eine Lage aus einer Folie und/oder eine Lage eines Vliesstoffs, beispielsweise eines Meltblowns, umfassen oder hieraus bestehen. Alternativ oder zusätzlich kann als Material für den Vliesstoff Vistamaxx (Hersteller: ExxonMobil Chemical) verwendet werden.

Wenigstens eine Lage des mindestens einen Befestigungsbands kann gekreppt sein. Die gekreppte Lage kann z.B. mittels des Micrex-Mikro-Krepp-Verfahrens erhalten sein. Bei einem mehrlagigen Befestigungsband kann das Laminat aus den mehreren Lagen ein gekrepptes Material sein.

Die Kreppung der gekreppten Lage des mindestens einen Befestigungsbands kann mittels eines aufgebrachten Klebstoffs, insbesondere eines im ausgehärteten Zustand elastischen Klebstoffs, stabilisiert sein. Als Klebstoff kommt insbesondere ein Hotmelt in Frage. Der Klebstoff kann auf der gekreppten Lage in Form eines oder mehrerer Streifen, insbesondere in Längsrichtung des Befestigungsbands, aufgebracht sein. Dies führt zu einer vorteilhaften Stabilisierung bzw. Fixierung der Kreppung, ohne die Gesamtelastizität des Befestigungsbands allzu sehr zu beinträchtigen.

Das Befestigungsband kann in Form eines Laminats aus einer TPU-Folie und einem TPU-Meltblown, TPU-Spunbond oder TPU Spun-blown ausgebildet sein. Dieser Aufbau ergibt eine gute Elastizität bei hoher Stabilität des Befestigungsbands. Außerdem kann ein solches Befestigungsband in vorteilhafter Weise mit dem Filtermaterialstück verschweißt werden.

Bei einem Befestigungsband in Form eines Laminats umfassend eine Folie und einen Vliesstoff kann die Folie, insbesondere in Form einer Gießfolie, direkt auf den Vliesstoff auflaminiert sein. Damit ist kein zusätzlicher Klebstoff erforderlich.

Das Befestigungsband kann zu einer Kordel gedreht oder verdrillt ausgebildet sein. Dies erhöht den Tragekomfort. Dabei ist es möglich, die Verdrillung durch eine thermische Fixierung (z. B. Ultraschallschweißung) daran zu hindern, sich wieder zurückzudrehen.

Die beschriebenen Atemschutzmasken können (genau) zwei Befestigungsbänder umfassen.

Ein oder mehrere Befestigungsbänder können derart ausgebildet sein, um den Hinterkopf eines Trägers (Nutzers) geführt zu werden. Alternativ können ein oder mehrere Befestigungsbänder derart ausgebildet sein, um ein Ohr eines Trägers (Nutzers) geführt zu werden.

Das wenigstens eine Befestigungsband kann als geschlossenes Band ausgeführt sein. Dies bedeutet, dass das entsprechende Befestigungsband kein loses oder offenes Ende aufweist. Dies kann beispielsweise dadurch erreicht werden, dass beide Enden eines Befestigungsbands mit dem Filterteil bzw. dem Filtermaterialstück verbunden sind. Alternativ kann beispielsweise das entsprechende Band als solches geschlossen ausgeführt sein; es kann also eine Ring- oder Schlaufenform aufweisen.

Gemäß einer Alternative kann die Atemschutzmaske wenigstens zwei, insbesondere vier Befestigungsbänder mit offenem bzw. losem Ende aufweisen. Dies bedeutet, dass jeweils (nur) ein Ende jedes Befestigungsbands an dem Filterteil bzw. einer Vliesstoffbahn befestigt ist. Die offenen/losen Enden von jeweils zwei Befestigungsbändern lassen sich verknoten.

Das wenigstens eine Befestigungsband kann sich über eine gesamte Länge des Filtermaterialstücks bzw. des Filterteils erstrecken. Dies erlaubt, das wenigstens eine Befestigungsband während der Fertigung mit dem luftdurchlässigen Material mitlaufen zu lassen und gemeinsam mit diesem (an den Enden des Filtermaterialstücks) zu schneiden.

Insbesondere können zwei Befestigungsbänder vorgesehen sein, die sich über eine gesamte Länge des Filtermaterialstücks bzw. Filterteils erstrecken. Vorzugsweise sind diese zwei Befestigungsbänder auf der gleichen Seite des luftdurchlässigen Materials bzw. Filtermaterialstücks und entlang zweier gegenüberliegender Kanten des Filtermaterialstücks angeordnet.

Das wenigstens eine Befestigungsband kann an seinen zwei Endbereichen mit dem luftdurchlässigen Material verbunden, insbesondere verschweißt sein.

Die zuvor beschriebenen Atemschutzmasken können einen biegbaren Nasensteg umfassen. Dies erlaubt eine Optimierung der Passform, insbesondere einen besseren Abschluss der Atemschutzmaske im Augen- und Nasenbereich, sowie einen verbesserten Halt.

In diesem Fall kann die Atemschutzmaske aus dem luftdurchlässigen Material (bzw. einem oder mehreren Filtermaterialstücken), dem wenigstens einen Befestigungsband und dem Nasensteg bestehen.

Der Nasensteg kann aus dem gleichen Kunststoffmaterial wie das luftdurchlässige Material und das Befestigungsband sein. Er kann quer zu seiner Längsrichtung einen oder mehrere Vorbrüche aufweisen. Diese ermöglichen eine vorteilhafte Anpassung des Nasenstegs an die Gesichtsform.

Der Nasensteg kann parallel zur nicht verschweißten Kante angeordnet sein. Er kann außen auf der Atemschutzmaske oder in eine der beiden Vliesstoffbahnen eingebettet angeordnet sein.

Die Breite des Nasenstegs kann 1 bis 10 mm betragen. Die Länge des Nasenstegs kann 2 cm bis 25 cm, insbesondere mehr als 4 cm und/oder weniger als 10 cm betragen. Der Nasensteg kann auch sich über die gesamte Länge einer Kante des Filtermaterialstücks erstrecken. Letzteres erlaubt eine vereinfachte Herstellung, da der Nasensteg gemeinsam mit Filtermaterialstück während der Herstellung geschnitten werden kann.

Der Nasensteg kann nicht-zerstörungsfrei lösbar oder zerstörungsfrei lösbar an dem Filtermaterialstück befestigt sein. Der Nasensteg kann mit dem Filtermaterialstück verklebt oder verschweißt sein. Die Befestigung mittels Klebstoffs kann durch ein Hotmelt erfolgen. Der Nasensteg kann entlang seiner gesamten Länge kontinuierlich oder nur an einzelnen diskreten Punkten mit dem Filtermaterialstück verbunden sein.

Die zuvor beschriebenen Atemschutzmasken können als Halbmaske ausgebildet sein. Damit bedecken sie im Gebrauch Nase, Mund und Kinn des Trägers. Die zuvor beschriebenen Atemschutzmasken können als medizinische Gesichtsmasken gemäß der DIN EN 14683:2019+AC:2019 oder als filtrierende Halbmaske gemäß der DIN EN 149 ausgebildet sein.

Die Erfindung stellt weiterhin ein System (Kit-of-Parts) umfassend eine wie zuvor beschriebene Atemschutzmaske und eine Schutzhülle für die Atemschutzmaske bereit, wobei die Schutzhülle aus dem gleichen Kunststoffmaterial wie das luftdurchlässige Material und das Befestigungsband gefertigt ist.

Dies ermöglicht einen optimierten Recycling-Prozess für die erfindungsgemäße Atemschutzmaske, inklusive deren Vertriebs und/oder Rücknahme. Die Schutzhülle kann als Verpackung beim Vertrieb (bspw. Verkauf oder Versand) und/oder beim Rücknahmeprozess (bspw. bei entsprechenden Sammelstellen oder einem Rückversand) dienen.

Dabei kann die Schutzhülle eine Kodierung, beispielweise eine Farbkodierung, zur Identifizierung des verwendeten Kunststoffmaterials aufweisen. Eine entsprechende Kodierung kann auch an der Atemschutzmaske vorgesehen sein.

Die vorliegende Erfindung wird anhand der nachfolgenden beispielhaften Ausführungen unter Bezugnahme auf die Figuren näher beleuchtet, ohne die Erfindung auf die speziellen dargestellten Ausführungen zu beschränken. Dabei zeigen
- Fig. 1: schematisch eine Atemschutzmaske,
- Fig. 2: eine schematische Querschnittsansicht des Aufbaus eines Filtermaterialstücks einer Atemschutzmaske,
- Fig. 3: eine schematische Draufsicht auf eine Atemschutzmaske,
- Fig. 4: eine schematische Seitenansicht eines Filterteils einer Atemschutzmaske.

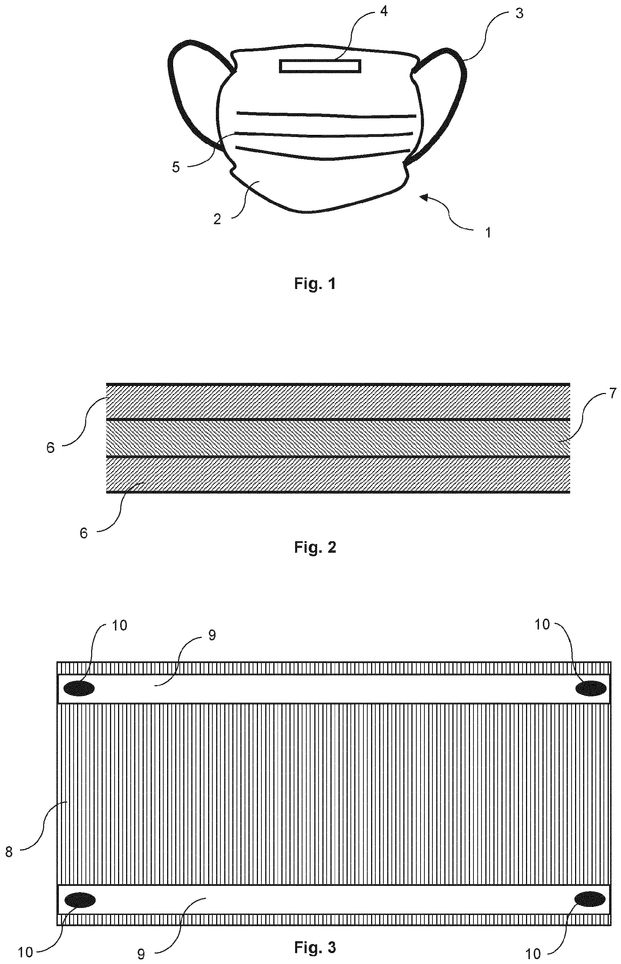

Figur 1 zeigt eine schematische Ansicht einer Atemschutzmaske 1 in Form einer Halbmaske. Es handelt sich hierbei um ein Beispiel einer medizinischen Gesichtsmaske. Die dargestellte Atemschutzmaske 1 umfasst genau ein Filtermaterialstück bzw. ein Filterteil 2. Der Zuschnitt des Filtermaterialstücks ist grundsätzlich rechteckig, kann aber auch andere insbesondere polygonale Formen annehmen.

An dem Filtermaterialstück 2 sind in dem gezeigten Beispiel zwei Befestigungsbänder 3 befestigt. Bei der Illustrierten Ausführungsform sind die Befestigungsbänder zur Befestigung an den Ohren des Trägers vorgesehen.

Zur besseren Anpassung an die Gesichtsform weist die Atemschutzmaske einen Nasensteg 4 auf, der nicht-zerstörungsfrei oder zerstörungsfrei lösbar mit dem Filtermaterialstück verbunden ist. Es kann sich insbesondere um einen Streifen eines Kunststoffmaterials handeln, der quer zur Längsrichtung mit Vorbrüchen ähnlich zu Filmscharnieren versehen ist, um eine einfache Biegung zu ermöglichen.

Eine nicht-zerstörungsfreie Verbindung besteht beispielsweise in einem Verschweißen. Dies kann entweder kontinuierlich über die gesamte Länge des Nasenstegs oder an einzelnen diskreten Punkten sein. Alternativ kann der Nasensteg mit dem Filtermaterialstück verklebt sein. Hierfür kann beispielsweise ein Hotmelt verwendet werden, was typischerweise ebenfalls zu einer nicht-zerstörungsfreien Verbindung führt.

Alternativ wird der Nasensteg als separates Element dem Nutzer zur Verfügung gestellt. In diesem Fall weist der Nasensteg eine selbstklebende Oberfläche auf, die anfänglich mit einem Schutzfilm abgedeckt ist. Nach Entfernung des Schutzfilms klebt der Benutzer den Nasensteg auf den Vliesstoff auf. Je nach eingesetztem Klebematerial lässt sich ein derartiger Nasensteg auch für andere Atemschutzfilterteile wiederverwenden.

In dem Ausführungsbeispiel sind in den Filterteil bzw. das luftdurchlässige Material 2 drei Falten 5 eingebracht.

In der schematischen Querschnittsansicht der Figur 2 ist der Aufbau eines Filtermaterialstücks für eine Atemschutzmaske illustriert. Zwischen zwei Stützlagen 6 ist eine Feinfilterlage 7 angeordnet. Die drei Lagen können insbesondere entlang der Kanten, also des Umfangs, des Filterteils 2, wie es in Figur 1 illustriert ist, miteinander verschweißt sein.

Alternativ zu dem in Figur 2 gezeigten Aufbau kann das luftdurchlässige Material der Atemschutzmaske auch weniger oder mehr Lagen umfassen. So können beispielsweise nur eine Feinfilterlage oder nur eine Stützlage mit einer Feinfilterlage vorgesehen sein.

Das Filtermaterialstück 2, die Befestigungsbänder 3 und der Nasensteg 4 sind alle aus dem gleichen Kunststoffmaterial gefertigt, so dass eine sortenreine Atemschutzmaske vorliegt. Insbesondere kann PP, PET oder PLA verwendet werden.

Die Atemschutzmasken weisen in einer Ausführungsform eine oder mehrere Lagen PET-, PP-oder PLA-Filamente oder PET-, PP-oder PLA-Stapelfasern auf. Zu den einzelnen Filterlagen:
Als Stützlagen 6 kommen insbesondere Spinnvlieslagen mit einem Flächengewicht von 5 bis 50 g/m² und einem Titer von 1 dtex bis 15 dtex in Frage.

Als Feinfilterlagen 7 werden eine oder mehrere Vliesstofflagen Meltblown oder Spun-Blown mit einem Flächengewicht von jeweils 5 bis 30 g/m² eingesetzt. Zumindest diese Lage(n) werden elektrostatisch aufgeladen.

Die Filamente oder Stapelfasern können auch aus Bikomponentenmaterialien bestehen.

Konkret kann das Filtermaterialstück aus einem dreilagigen luftdurchlässigen Material bestehen. Dabei ist zwischen zwei Spunbondvliesstofflagen aus PP, PET oder PLA mit einer Grammatur von 20 g/m² eine Meltblownvliesstofflage mit einer Grammatur von 20 g/m² angeordnet. Das so erhaltene SMS kann durch eine entlang der Kanten umlaufende Schweißnaht ultraschallverschweißt sein.

Das Meltblown oder Spun-Blown kann durch Zusatz von Additiven und einer Wasserstrahlbehandlung (Hydrocharging), wie sie beispielsweise in der WO 97/07272 beschrieben ist, elektrostatisch geladen werden.

Alternativ kann das Meltblown oder Spun-Blown eine Grammatur von 25 g/m² aufweisen und mittels einer Corona-Behandlung elektrostatisch geladen worden sein.

Das illustrierte SMS wurde einem Micrex-Mikro-Krepp-Verfahren unterworfen. Mit anderen Worten ist das gesamte Laminat gekreppt. In einer alternativen Ausführung können auch nur einzelne Lagen gekreppt sein. So kann beispielsweise das zentral angeordnete Meltblown 7 gekreppt sein, die Spunbond-Stützlagen 6 hingegen nicht. Die Stützlagen dienen dann u.a. auch dazu, die Kreppung des Meltblowns zu stabilisieren. Dies ist insbesondere von Vorteil, wenn das für das Meltblown verwendete Material per se die Kreppung nicht ohne weiteres hält, wie dies beispielsweise für Polypropylen der Fall ist.

Rein beispielhaft wird für die Kreppung auf die WO 2007/079502 verwiesen. Die damit erzielt Erhöhung der Oberfläche führt zu einer besseren Anpassung der daraus hergestellten Atemschutzmaske an die Kopf- und Gesichtsform des Trägers. Außerdem ergibt sich eine weichere Anmutung und eine verbesserte Feuchtigkeitsaufnahme.

Figur 3 zeigt eine schematische Draufsicht eines luftdurchlässigen Materials 8, das dem Filterteil 2 der Figur 1 entspricht. Im Vergleich mit der Figur 1 zeigt Figur 3 jedoch die Rückseite des Filterteils, also die einem Benutzer zugewandte Seite.

In dem illustrierten Beispiel sind an gegenüberliegenden Kanten des luftdurchlässigen Materials 8 jeweils ein Befestigungsband 9 angeordnet, dass sich über die gesamte Kantenlänge erstreckt. Die Befestigungsbänder können somit bei der Fertigung des Filterteils mit dem luftdurchlässigen Material mitlaufen und gemeinsam mit diesem geschnitten werden. Die Verbindung von Befestigungsband und luftdurchlässigem Material erfolgt in dem gezeigten Beispiel über jeweils einen Schweißpunkt 10 an den einander gegenüberliegenden Endbereichen jedes Befestigungsbands 9.

Für das Befestigungsband wird beispielsweise ein TPU-Laminat aus einer TPU-Folie mit einer Dicke von 20 µm bis 100 µm und einem TPU-Meltblown (Grammatur: 20 bis 80 g/m²) verwendet, das mit dem Filtermaterialstück verschweißt ist. Für das Verschweißen lässt sich für die Erzielung einer hohen Festigkeit das in den europäischen Patentanmeldungen EP 18213001.3 und EP 19180533.2 in einem anderen technischen Gebiet offenbarte Verfahren einsetzen.

Das nach dem Vistamaxx-Verfahren hergestellte PP-Material kann im Meltblown- oder Foliengieß- oder Blasfolien-Verfahren hergestellt sein und - wie beim TPU-Laminat beschrieben - laminiert worden sein.

In dem illustrierten Beispiel gemäß Figur 3 ist das luftdurchlässige Material wieder als Ganzes gekreppt. Die durch die Schraffur angedeutete Krepprichtung, also die Richtung der Kreppfalten, ist im bestimmungsgemäßen Gebrauch der Atemschutzmaske vertikal. In diesem Beispiel ist die Krepprichtung quer zur Maschinenrichtung der Fertigungsmaschine, die in der Zeichnung von links nach rechts verläuft.

Vorzugsweise erfolgt die Kreppung bei der Herstellung vor der Verschweißung der Lagen des Filtermaterialstücks. Auf diese Weise wird die Kreppung stabilisiert.

In das Filtermaterialstück 8 können parallel zu den Befestigungsbändern 9, quer zu den Kreppfalten, (makroskopische) Querfalten - wie die Falten 5 in Figur 1 - eingebracht werden. Diese Falten werden durch ein (Ein-)Falten des luftdurchlässigen Materials erhalten, so dass in dem Bereich der Falten bzw. Querfalten in fertigem, unbenutzten Zustand des Filtermaterialstücks Bereiche des luftdurchlässigen Materials übereinander liegen.

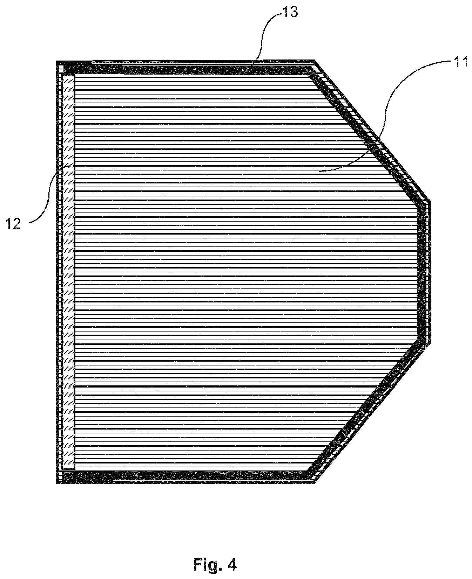

Figur 4 zeigt eine schematische Seitenansicht eines Filterteils einer Atemschutzmaske. Der Filterteil umfasst zwei Filtermaterialstücke 11, von denen in Figur 4 nur eine zu sehen ist.

Beide Filtermaterialstücke haben eine sechseckige Form und liegen passgenau aufeinander. Somit hat auch der durch die miteinander verschweißten Filtermaterialstücke 11 gebildete Filterteil als solches (in fertigem, aber unbenutztem Zustand) eine sechseckige Form.

Die Kante auf der linken Seite liegt zwischen zwei rechten Winkeln, wird also durch zwei zueinander parallele Kanten begrenzt, die auf der dazwischenliegenden Kante senkrecht stehen.

Das luftdurchlässige Material beider Filtermaterialstücke ist gekreppt. Die Krepprichtung ist auch hier durch die Schraffur angedeutet; die Kreppfalten verlaufen im bestimmungsgemäßen Gebrauch der aus dem Filterteil gefertigten Atemschutzmaske im Wesentlichen waagrecht.

Jedes der beiden Filtermaterialstücke 11 ist in Form eines SMS aufgebaut, wie es beispielsweise in Zusammenhang mit Figur 2 erläutert wurde. Die drei Lagen eines Filtermaterialstücks sind dabei zunächst entlang der Kante zwischen den beiden rechten Winkeln, auf der linken Seite in der Figur, miteinander verschweißt worden. Die entsprechende Schweißnaht 12 des gezeigten Filtermaterialstücks 11 verläuft parallel zur linken Kante.

Die Schweißnaht 13 entlang der übrigen fünf Kanten ist eine Verschweißung der beiden Filtermaterialstücke miteinander. An diesen Kanten liegt keine separate Verschweißung der SMS-Lagen eines Filtermaterialstücks als solches vor. Auf der Seite der Schweißnaht 12 hingegen sind die beiden Filtermaterialstücke nicht miteinander verschweißt. Dies bildet die offene Seite der Atemschutzmaske, die dem Gesicht des Trägers zugewandt sein wird.

Bei der Herstellung werden also zunächst die drei Lagen SMS in Form von Vliesstoffbahnen lose aufeinander gelegt und mittels der Schweißnaht 12 entlang der einen Kante verschweißt. Die übrigen fünf Kanten bleiben offen, die Lagen mithin lose. Maschinenrichtung der Fertigungsmaschine verläuft in der Anordnung der Figur 4 von oben nach unten, parallel zur Schweißnaht 12. Die nur auf einer Seite verschweißte SMS-Filtermaterialbahn wird dann gesamthaft gekreppt, wobei die Krepprichtung, also die Richtung der Kreppfalten, quer, d.h. im Wesentlichen senkrecht zur Maschinenrichtung bzw. der Schweißnaht 12, liegt. Anschließend werden zwei derartige gekreppte SMS-Filtermaterialbahnen in Maschinenrichtung, d.h. in Richtung der bzw. parallel zur Schweißnaht 12, übereinander geführt, so dass sie aufeinander zu liegen kommen. Es erfolgt eine Verschweißung der beiden SMS-Filtermaterialbahnen, also der insgesamt sechs Lagen aus zwei SMS, entlang der Schweißnaht 13, durch die fünf Kanten der zwei übereinander liegenden Filtermaterialstücke gebildet werden. Entlang dieser Kanten werden die beiden Filtermaterialbahnen gestanzt, so dass dann ein Filterteil 11 wie in Figur 4 gezeigt erhalten wird.

Die daraus resultierende Atemschutzmaske ist insbesondere auf ihrer offenen Seite, d.h. im Bereich der Schweißnaht 12 in vorteilhafter Weise dehnbar, was eine gute Gesichtsanpassung erlaubt. Daneben ist aufgrund der Kreppung auch die Luftdurchlässigkeit hoch und der Atemwiderstand niedrig.

## Patentansprüche

1. Atemschutzmaske umfassend ein Filtermaterialstück aus einem luftdurchlässigen Material und wenigstens ein Befestigungsband,
wobei das luftdurchlässige Material mindestens eine Lage eines Vliesstoffes umfasst,
wobei das wenigstens eine Befestigungsband zur Befestigung der Atemschutzmaske am Kopf ausgebildet ist,
wobei das luftdurchlässige Material und das wenigstens eine Befestigungsband aus dem gleichen Kunststoffmaterial gefertigt sind.

2. Atemschutzmaske nach Anspruch 1, wobei das Kunststoffmaterial Polypropylen, ein Polyester, insbesondere Polyethylenterephthalat und/oder ein biologisch abbaubares Kunststoffmaterial ist.

3. Atemschutzmaske nach Anspruch 2, wobei das biologisch abbaubare Kunststoffmaterial ein Polylactid (PLA), ein Polyhydroxyalkanoat (PHA), ein Polycaprolacton (PCL), einen Celluloseester, insbesondere Celluloseacetat, Polybutylenadipat-terephthalat (PBAT) oder Polybutylensuccinat (PBS), ist.

4. Atemschutzmaske nach einem der vorangegangenen Ansprüche, wobei der biologisch abbaubare Vliesstoff ein trocken- oder nassgelegter Vliesstoff oder ein Extrusionsvliesstoff ist.

5. Atemschutzmaske nach einem der vorhergehenden Ansprüche, wobei das luftdurchlässige Material einlagig oder mehrlagig aufgebaut ist, wobei mindestens eine, mehrere oder sämtliche der Lagen ein Vliesstoff sind.

6. Atemschutzmaske nach einem der vorhergehenden Ansprüche, wobei das luftdurchlässige Material mindestens eine Feinfilterlage und/oder mindestens eine Stützlage umfasst, wobei mindestens eine, mehrere oder sämtliche der Feinfilterlagen und/oder mindestens eine, mehrere oder sämtliche der Stützlagen Vliesstoffe sind.

7. Atemschutzmaske nach einem der vorangegangenen Ansprüche, wobei mindestens eine, mehrere oder sämtliche der Vliesstofflage elektrostatisch aufgeladen sind.

8. Atemschutzmaske nach einem der vorhergehenden Ansprüche, wobei das luftdurchlässige Material mehrlagig ausgebildet ist mit einer Lagenfolge:
eine Stützlage, eine oder zwei Feinfilterlagen sowie eine weitere Stützlage,
insbesondere wobei die Stützlagen und/oder die ein oder zwei Feinfilterlagen jeweils eine Vliesstofflage sind.

9. Atemschutzmaske nach einem der vorhergehenden Ansprüche, wobei mindestens eine, mehrere oder sämtliche der Vliesstofflage gekreppt sind.

10. Atemschutzmaske nach einem der vorhergehenden Ansprüche, wobei das wenigstens eine Befestigungsband mehrlagig aufgebaut ist, wobei das Befestigungsband eine Lage aus einer Folie und eine Lage eines Vliesstoffs umfasst oder hieraus besteht

11. Atemschutzmaske nach einem der vorhergehenden Ansprüche, wobei das Befestigungsband ein thermoplastisches Polymer, insbesondere ein biologisch abbaubares thermoplastisches Polymer, umfasst oder hieraus gebildet ist.

12. Atemschutzmaske nach einem der vorhergehenden Ansprüche, wobei wenigstens eine Lage des Befestigungsbands gekreppt ist.

13. Atemschutzmaske nach vorhergehendem Anspruch, wobei die Kreppung der gekreppten Lage mittels eines aufgebrachten Klebstoffs, insbesondere eines im ausgehärteten Zustand elastischen Klebstoffs, stabilisiert ist.

14. Atemschutzmaske nach einem der vorangegangenen Ansprüche, umfassend einen biegbaren Nasensteg, insbesondere aus dem gleichen Kunststoffmaterial wie das luftdurchlässige Material und das Befestigungsband.

15. Atemschutzmaske nach einem der vorangegangenen Ansprüche, wobei die Atemschutzmaske als Halbmaske, insbesondere als medizinische Gesichtsmaske gemäß der DIN EN 14683:2019+AC:2019 oder als filtrierende Halbmaske gemäß der DIN EN 149 ausgebildet ist.

16. System umfassend eine Atemschutzmaske nach einem der vorhergehenden Ansprüche und eine Schutzhülle für die Atemschutzmaske, wobei die Schutzhülle aus dem gleichen Kunststoffmaterial wie das luftdurchlässige Material und das Befestigungsband gefertigt ist.
